Europäisches Patentamt

European Patent Office

Office européen des brevets

(19)

(11) Numéro de publication: **0 031 308**
**B1**

(12) **FASCICULE DE BREVET EUROPEEN**

(45) Date de publication du fascicule du brevet: **27.06.84**

(21) Numéro de dépôt: **80810403.8**

(22) Date de dépôt: **17.12.80**

(51) Int. Cl.³: **D 06 F 35/00, A 47 L 15/00**
**//C25B1/26**

(54) Machine automatique à laver le linge ou la vaisselle.

(30) Priorité: **20.12.79 CH 11313/79**
**20.12.79 CH 11314/79**

(43) Date de publication de la demande:
**01.07.81 Bulletin 81/26**

(45) Mention de la délivrance du brevet:
**27.06.84 Bulletin 84/26**

(84) Etats contractants désignés:
**AT BE CH DE FR GB IT LI NL SE**

(56) Documents cités:
**EP - A - 0 002 423**
**US - A - 4 118 307**

(73) Titulaire: **BATTELLE MEMORIAL INSTITUTE**
**7 route de Drize**
**CH-1227 Carouge/Genève (CH)**

(72) Inventeur: **Groult, Alain**
**Juvigny (Les Fossats)**
**F-74100 Annemasse (FR)**
Inventeur: **Porta, Augusto**
**20e route de Drize**
**F-1227 Carouge (CH)**
Inventeur: **Tournier, Hervé**
**Le Riondet**
**F-74520 Valleiry (FR)**

(74) Mandataire: **Dousse, Blasco et al,**
**7, route de Drize**
**CH-1227 Carouge/Genève (CH)**

Courier Press, Leamington Spa, England.

## Description

Domaine technique

La présente invention a pour objet une machine automatique à laver le linge ou la vaisselle dans laquelle de l'hypochlorite de sodium peut être ajouté séparément et à volonté au bain lessiviel dans le but de blanchir, de désinfecter ou d'obtenir ces deux effets simultanément.

Technique antérieure

On a déjà proposé dans la demande EP—A— 0 002 423 de munir une machine à laver le linge d'une cellule électrochimique de production d'eau oxygénée comprenant compartiment cathodique et un compartiment anodique pouvant servir à la production d'hypochlorite de sodium conjointement à celle d'eau oxygénée. La combinaison des deux substances donne de l'oxygène "singlet" qui est un agent de blanchiment très énergique. Toutefois un tel mélange n'est pas adapté à des applications où seule l'action bactéricide et fongicide est recherchée, il n'est pas non plus adapté à l'utilisation dans les lave-vaisselles.

Il a également été proposé dans le brevet US—A—4 118 307 une cellule électrochimique de production d'hypochlorite comprenant des moyens pour délivrer des quantités dosées d'hypochlorite relativement concentré.

Une telle cellule est cependant utilisable notamment dans le cas de piscines, ou dans toutes les applications où l'utilisation d'hypochlorite est relativement continue. On sait en effet que l'hypochlorite produit dans une telle cellule ne se conserve pas du fait qu'il n'est pas stabilisé. Il doit donc être utilisé immédiatement. Or les machines de ménage à laver le linge ou la vaisselle ne fonctionnent que périodiquement de sorte qu'une telle cellule n'est pas adaptée à leur usage. En outre l'utilisation d'hypochlorite concentré risque d'endommager le linge du fait que sa dilution dans le bain lessiviel n'est pas immédiate. De plus, le dosage précis de petits volumes d'hypochlorite concentré est difficile à réaliser avec précision.

Par ailleurs, il n'est pas possible d'envisager l'utilisation de cellules de production d'hypochlorite de type industrielle pour produire des doses concentrées on très faible quantité.

Il a d'autre part déjà été proposé par le DE—A—2 134 850 un procédé de lavage de vaisselle selon lequel on forme un bain lessiviel avec un agent de nettoyage contenant une formulation enzymatique en chauffant le bain à 55°C puis on introduit un agent de nettoyage à composé à chlore actif en chauffant le bain jusqu'à 65°C. Malheureusement, ce procédé est difficile à mettre en oeuvre avec l'eau de Javel du commerce en raison des problèmes de stockage en présence d'une source chaude constituée par la proximité de la cuve de lavage. D'autre part, vu les faibles quantités de NaOCl nécessaires à chaque lavage, il n'est pas possible de requérir de l'utilisateur d'introduire lui-même des doses aussi faibles avec précision lors de chaque lavage. Le problème reste donc posé quant aux moyens capables de mettre en oeuvre un procédé tel que celui proposé par ce document.

En plus de ces différents problèmes, il est encore à relever que la concentration d'hypochlorite nécessaire peut varier sensiblement suivant l'action recherchée, ce qui suppose une souplesse relativement grande dans la concentration d'hypochlorite alimentant le bain lessiviel.

Exposé de l'invention

Le but de la présente invention est d'apporter une solution pour l'alimentation des machines automatiques à laver le linge ou la vaisselle en quantités dosées d'hypochlorite.

A cet effet l'invention a pour objet une machine automatique à laver le linge ou la vaisselle, selon la revendication 1.

La celle électrochimique équipant la machine à laver selon l'invention est conçue pour conférer une large autonomie à cette machine et pour permettre de s'adapter aisément aux différents usages auxquels l'hypochlorite produit est destiné. La production d'hypochlorite à basse concentration permet de donner à la cellule des dimensions suffisantes pour produire les doses d'hypochlorite nécessaires, en un temps compatible avec la durée du cycle de lavage. Les moyens de dosage permettent d'adapter cette concentration suivant les besoins. En outre seules les doses nécessaires à un processus de lavage peuvent être produites, évitant les problèmes de stockage et de dégradation de l'hypochlorite.

Brève description des dessins

Le dessin annexé illustre, très schématiquement et à titre d'exemple, deux formes d'exécution d'une machine à laver automatique objet de la présente invention.

La fig. 1 est un schéma de la première forme d'exécution relative à une machine à laver le linge.

La fig. 2 est un schéma de la seconde forme d'exécution relative à un lave-vaisselle.

Meilleures manières de réaliser l'invention

Dans la description qui va suivre, ne seront décrits des machines à laver le linge ou la vaisselle, que les seuls éléments nécessaires à la compréhension de la présente invention.

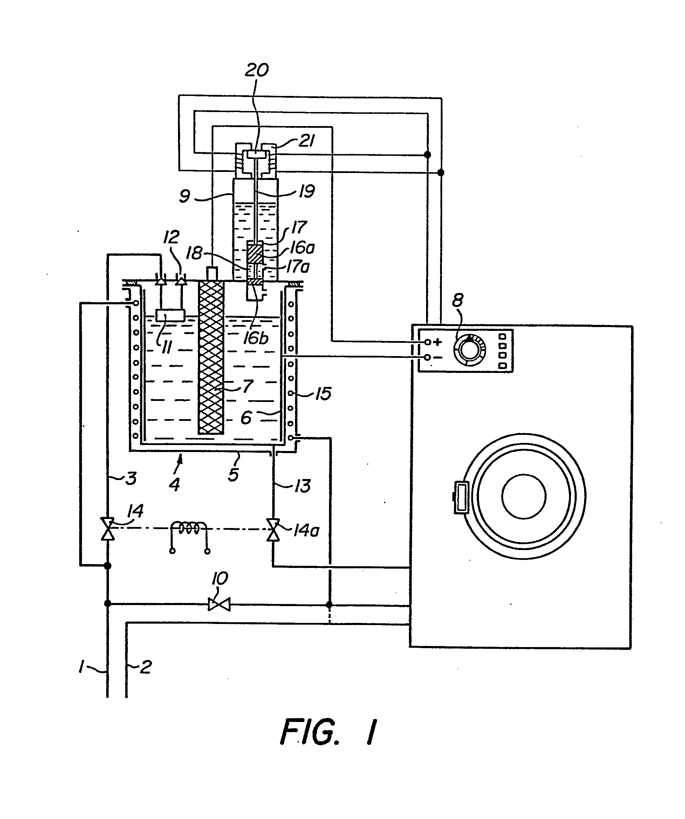

La machine à laver illustrée par la fig. 1 est alimentée en eau par un conduit d'alimentation 1, un conduit de vidange 2 servant à évacuer les eaux usées. Le conduit d'alimentation 1 est relié par un conduit de liaison 3 à une entrée d'une cellule électrochimique 4. Cette cellule comporte un bac 5 en acier inoxydable. La face interne de la paroi latérale de ce bac reçoit une électrode tubulaire 6 en graphite, titane platiné en acier inox reliée au pôle négatif de la source de courant et constituant de ce fait la cathode. Une second électrode 7 en graphite, en titane platiné ou en titane recouvert d'oxydes de métaux nobles reliée au pôle positif de la source de courant et constituant l'anode de la cellule électrochimique s'étend axialement dans le bac 5. Le réglage de l'intensité du courant imposée aux électrodes 6 et 7 est déterminé en fonction du programme de lavage et de la concentration d'hypochlorite de sodium désirée. Par conséquent, un sélecteur de programme 8 dont est habituellement muni toute machine à laver automatique règle l'intensité du courant d'alimentation de la cellule pour fournir la densité de courant nécessaire. La cellule électro-chimique 4 est dépourvue de diaphragme de sorte que le mélange de chlore et de soude résultant de l'électrolyte de la saumure produira par réaction, de l'hypochlorite de sodium. Le chlorure de sodium nécessaire à la formation de la saumure constituant le bain électrolytique est contenu dans un distributeur 9 pourvu d'un dispositif doseur qui comporte un piston doseur à deux segments 16a et 16b, monté dans un tube de distribution 17 muni d'une ouverture d'admission 17a. Ce piston délimite une chambre 18 entre les deux segments de piston 16a et 16b. Le volume de cette chambre 18 est choisi pour correspondre à la dose minimale de saumure nécessaire à l'alimentation de la cellule électrochimique 4. Le piston doseur 16a, 16b est solidaire d'une tige 19 qui s'étend à l'extérieur du distributeur 9 et se termine par un disque ferromagnétique 20 monté dans l'entrefer d'un électro-aimant 21. Le nombre de doses distribuées par le piston doseur détermine la concentration de l'électrolyte en chlorure de sodium. Une double valve à flotteur 11 contrôle l'extrémité du conduit de liaison 3 aboutissant à la cellule électrochimique 4 ainsi qu'une ouverture 12 de communication avec l'atmosphère. Un conduit de sortie 13 relie la cellule électrochimique 4 à la cuve de lavage de la machine à laver. Ce conduit de sortie 13 et le conduit de liaison 3 sont contrôlés simultanément par une électrovanne à deux voies 14, 14a dont l'une est ouverte quand l'autre est fermée et vice-versa.

La cellule électrochimique est encore pourvue d'un dispositif de refroidissement constitué par un serpentin 15 entourant la face externe du bac 5 et dont une extrémité est reliée au conduit de liaison 3 en amont de la vanne 14 tandis que l'autre extrémité est soit reliée au conduit d'alimentation 1 en un point situé en aval du branchement du conduit de liaison 3, soit au conduit de vidange 2, suivant que l'on désire récupérer ou non l'eau de refroidissement pour le lavage ou le rinçage. Si la sortie du serpentin 15 est reliée au conduit d'alimentation, une électro-vanne 10 est interposée entre les branchements des conduits 3 et 13 sur le conduit d'alimentation. Le refroidissement de la cellule électrochimique 4 sert à maintenir la température du bain électrolytique suffisamment basse pour assurer un bon rendement de formation de l'hypochlorite.

La dose d'hypochlorite de sodium habituellement utilisée pour désinfecter du linge est comprise entre 1,4 g et 6 g exceptionnelement jusqu'à 14,0 g. Le poids moléculaire du NaOCl est de 74,4. La production d'une mole nécessite 53,6 Ah. Pour produire 1,4 g de NaOCl avec un rendement de 100%, il faudrait 1 Ah. Avec un rendement faradique de 80%, le courant nécessaire est donc de 1,2 Ah et en ramenant la durée de production à 24 minutes, il faut alors 3 Ah, la tension de la cellule étant de l'ordre de 3,5 volts, 9 volts suivant la concentration de l'électrolyte. La densité de courant se situe entre 5 et 10 A/dm², de sorte que chaque électrode à une surface comprise entre 0,25 et 0,5 dm². Suivant la quantité d'hypochlorite désirée, la concentration de l'électrolyte peut varier entre 1 et 30 grammes pour une capacité totale de la cellule comprise entre 0,8 et 1,5 dm³ avec un taux de remplissage de 70 à 80%. La dose de 1,4 gramme de NaOCl peut être modifiée en variant soit la durée de production soit l'ampérage soit encore en modulant ces deux paramètres.

Le chargement de la cellule électrochimique se fait au moment désiré en introduisant le nombre de doses désirées à l'aide du piston doseur 16a, 16b actionné par l'électro-aimant 21. Une fois ces doses introduites en fonction de la concentration désirée de NaCl pour l'électrolyte, l'eau est introduite par l'ouverture de l'électro-vanne 14 contrôlant le conduit de liaison 3 jusqu'à ce que la valve à flotteur 11 ferme l'arrivée de ce conduit 3 dans la cellule électrochimique 4. Après le temps nécessaire à la production électrolytique d'hypochlorite de sodium, le courant alimentant les électrodes 6 et 7 est coupé et la position de l'électro-vanne à deux voies est inversée de sorte que le contenu de la cellule électrochimique 4 peut se vider dans la machine.

Bien entendu la détermination des doses de chlorure de sodium, du temps d'électrolyse de la solution et de l'intensité du courant peuvent être déterminés par le système général de programmation de la machine de manière à adapter la quantité d'hypochlorite à chaque type de lavage.

Ces doses sont en outre adaptables en fonction de l'utilisation désirée pour l'hypochlorite de sodium.

Comme on l'a mentionné ci-dessus, la désinfection courante nécessite généralement une dose de l'ordre de 1,4 g de NaOCl pour 20 litres d'eau. Toutefois, suivant le volume d'eau de rinçage, la nature des textiles, les couleurs et apprêts de ces textiles et le degré de désinfection désirée; suivant qu'il s'agit de linge courant ou de linge plus particulièrement susceptible d'être contaminé comme le linge provenant de malades contagieux notamment, la quantité de NaOCl peut varier entre 0,35 g et 14,0 g mais de préférence entre 1,4 g et 2,1 g dans la plupart des cas.

One peut envisager la production de 14,0 g de NaOCl dans les conditions suivantes:

On porte la densité de courant à 25 A/dm² et la surface d'électrode à 1,5 dm² qui peuvent être réparties en trois électrodes de 0,5 dm². Avec cette densité de courant, la concentration de NaCl pourrait être de l'ordre 10 g/l de sorte que le volume de l'électrolyte nécessaire pour obtenir les 14 grammes de NaOCl devra être environ de 3 litres. Dans ces conditions et étant donné qu'il faut 12 Ah pour produire 14,0 g de NaOCl avec un rendement faradique de 80% en 1 heure, il faudra environ 20 minutes pour produire ces 14,0 g avec 1,5 dm² d'électrodes alimentées par un courant de densité de 25 A/dm². Bien qu'il s'agisse d'un cas extrême, le calcul montre que les différents paramètres entrant en jeu dans cet exemple sont compatibles avec l'application envisagée.

L'hypochlorite de sodium peut encore être utilisé pour la javellisation du linge, opération qui englobe la désinfection et un blanchiment complémentaire et qui peit être effectuée avantageusement au deuxième rinçage. Dans ce cas et suivant les conditions fixées par le linge à traiter et la machine la dose de NaOCl peut varier de 3,5 g à 7,0 g.

Si l'hypochlorite est utilisé comme agent de blanchiment en lieu et place du perborate ou de l'eau oxygénée dans le bain de lavage, les doses varieront en fonction des différentes variables entre 5,0 g et 14,0 g toujours pour un bain lessiviel de 20 litres.

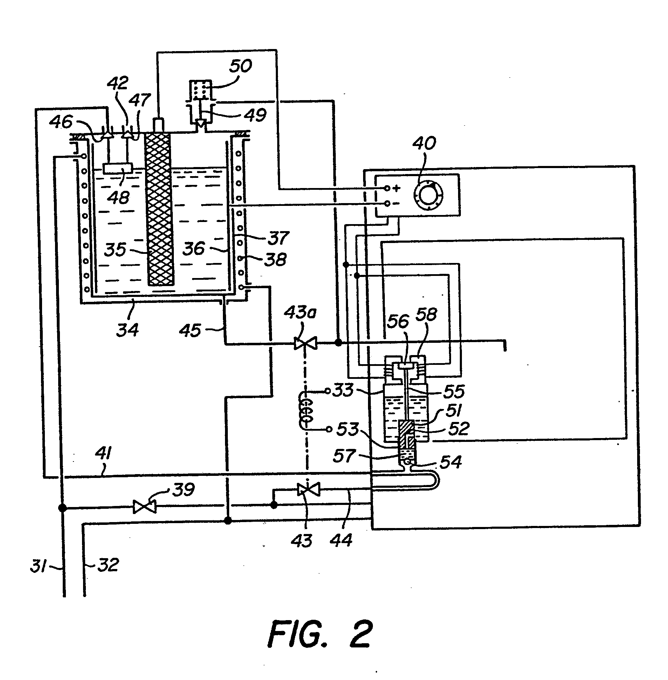

La machine à laver la vaisselle illustrée par la fig. 2 comporte un conduit d'alimentation en eau 31, et un conduit d'évacuation des eaux usées 32. Cette machine comporte en outre un réservoir de saumure 33 et une cellule électrochimique 34. Les proportions entre machine et cellule 34 ne correspondent pas à la réalité. Cette cellule 34 présente une anode 35 en graphite ou en titane platiné et une cathode tubulaire 36 en fer ajusté à l'intérieur d'une cuve cylindrique 37 en acier inoxydable, sans séparateur entre l'anode et la cathode. Cette cuve est entourée par un serpentin de refroidissement 38 dont une extrémité est reliée au conduit d'alimentation 31 en eau et dont l'autre extrémité, est soit reliée au conduit d'évacuation des eaux usées 32, soit en un point du conduit d'alimentation 31 situé en aval par rapport à l'endroit de raccordement de la première extrémité de ce serpentin au même tuyau d'alimentation 31. Dans ce dernier cas, une électro-vanne 39 devrait être placée sur le conduit d'alimentation 31 entre les deux points de raccordement avec le serpentin de refroidissement 38, de sorte qu'en cas de fermeture de l'électro-vanne 39, le serpentin de refroidissement 38 constituera une dérivation du conduit d'alimentation 31.

La cellule électrochimique 34 est alimentée en courant d'intensité réglable pour les raisons que l'on expliquera par la suite, cette intensité étant fixée de préférence en fonction du programme de lavage de la machine, sélectionné à l'aide d'un sélecteur manuel 40. Cette cellule électrochimique 34 comporte un conduit d'alimentation 41 relié au réservoir de saumure 33 lui-même relié au conduit d'alimentation en eau 31 par une électro-vanne 43 contrôlant un conduit de dérivation 44. Cette électro-vanne 43 fait partie d'un ensemble électro-vanne à deux voies dont le second élément 43a contrôle un conduit 45 reliant la sortie de la cellule électrochimique 34 au bac de lavage de la machine à laver.

L'alimentation de la cellule électrochimique 34 en concentrations désirées de chlorure de sodium, adaptées à la quantité necéssaire d'hypochlorite à produire suivant le cycle de lavage, est réalisée grâce à un système doseur qui comporte un piston 51 traversé par un conduit coudé 52 et monté dans un tube de distribution 53 qui débouche à la jonction des conduits d'alimentation 41 et de dérivation 44. Ce tube de distribution 53 est contrôlé par une valve anti-retour 54 maintenue normalement fermée par la pression de l'eau dans les conduits 41 et 44. Le piston 51 est solidaire d'une tige 55 qui s'étend à l'extérieur du réservoir de saumure 33 et se termine par un disque 56 monté dans l'entrefer d'un électro-aimant de commande 58. Lorsque le piston 51 est en position écartée de la valve anti-retour 54, une chambre de dosage 56 est ménagée entre cette valve et l'extrémité du piston. Comme la valve 54 est fermée lorsque le piston 51 s'écarte de cette valve 54, la chambre est en dépression. Dès que l'extrémité du conduit coudé 52, s'ouvrant dans la face latérale du piston 51, sort du tube de distribution 53, une dose de saumure est aspirée dans la chambre 57. Lors du déplacement en sens inverse du piston 51, le conduit coudé 52 est fermé dès que son extrémité s'ouvrant dans la face latérale du piston 51 pénètre dans le tube de distribution 53, Le liquide contenu dans la chambre de dosage 57 est emprisonné et force alors la valve 54 à s'ouvrir. La dose est injectée dans l'eau circulant du conduit de dérivation 44 au conduit d'alimentation 41.

L'extrémité du conduit 41 aboutissant à la cellule électrochimique 34 et une ouverture 42 reliée à l'atmosphère sont contrôlées par deux valves 46 et 47 solidaires d'un flotteur 48. Une soupape de sécurité 49, tarée par un ressort 50 sert au dégazage de la cellule 34 lorsque la pression dépasse un certain niveau. Cette soupape 49 peut être reliée au conduit 45 pour éviter le rejet de gaz chlorés dans l'atmosphère.

A titre d'exemple, la cellule électrochimique 34 peut avoir une capacité de l'ordre de 1 à 2/dm³, avec un taux de remplissage en électrolyte de l'ordre de 60 à 80%, la concentration de NaCl étant comprise entre 1 et 30 g/l. La dose de poudre pour un lavage est généralement de l'ordre de 30 g, au maximum de 60 g et les compositions actuelles comportent, pour une telle dose l'équivalent de 0,2 à 1,5 g de NaOCl, résultant de l'hydrolyse du composé organique à chlore actif. Les caractéristiques électriques de la cellule pour produire des doses de NaOCl de cet ordre sont semblables à celles données pour la cellule de la machine à laver le linge étant donné que la quantité de NaOCl est équivalente. La chaleur engendré par la réaction électro-chimique est évacuée par l'eau circulant dans le serpentin de refroidissement 38 et sert à empêcher la formation de chlorate qui résulterait si la température du bain s'élevait. Cette chaleur peut être récupérée par exemple au cours du premier rinçage si l'hypochlorite est produite à ce moment pour atténuer l'effet de choc thermique sur la vaisselle.

Bien entendu, les doses d'hypochlorite produites peuvent être sensiblement différentes de celles comprises dans les produits de lavage. Notamment, compte tenu du fait qu'il est possible de réduire la durée d'action du composé à chlore activ, on peut envisager d'en augmenter la dose de manière à améliorer l'effet bactéricide et fongicide. Pour fabriquer la quantité d'hypochlorite nécessaire à un cycle déterminé de lavage, l'électro-vanne à deux voies ferme la vanne 43a et ouvre la vanne 43. Simultanément, le piston 51 est actionné par l'électro-aimant 58 pour introduire une ou plusieurs doses correspondant au volume de la chambre 57, dans l'eau circulant dans le conduit 41 en direction de la cellule électrochimique 34, chargeant ainsi l'eau de la quantité de chlorure de sodium désirée. Lorsque la cellule est remplie au niveau désiré, les valves 46 et 47 ferment respectivement l'arrivée d'eau et la liaison avec l'atmosphère. Les électrodes 35 et 36 sont alimentées en courant d'intensité désirée. Lorsque le temps nécessaire à la production de la quantité d'hypochlorite désiré s'est écoulé, l'électro-vanne 43, 43a est actionnée en sens inverse pour vider le contenu de la cellule électrochimique 34 dans la cuve de lavage de la machine.

La production d'hypochlorite à la concentration désirée peut être fixée en liaison avec les différents programmes de lavage de la machine. L'introduction de la dose désirée d'hypochlorite dans le bain lessiviel ou dans un bain de rinçage peut être choisie au moment le plus opportun et pour une durée déterminée. La température de l'eau peut également être fixée. En général, ces choix se feront de manière à ce que toutes les conditions soient réunies pour obtenir un effet bactéricide et fongicide optimal tout en cherchant à éviter des effets néfastes sur la vaisselle, en particulier sur les décors et les ustensiles métalliques, ainsi que sur le lave-vaisselle même. De préférence l'introduction de l'hypochlorite de sodium se produira durant la fin de la phase de lavage ou durant le premier rinçage suivant la phase de lavage. Bien entendu, le produit de lavage utilisé pour former le bain lessiviel de la phase de lavage présente une formulation simplifiée et est notamment exempt d'un composé à chlore actif. On a déjà mentionné le fait que l'absence d'un tel composé permet d'envisager d'autres formulations détergentes et notamment des formulations contenant un système enzymatique sous forme d'enzyme seule ou de la combinaison d'enzymes spécifiques. Il est également possible d'envisager la formulation de compositions détergentes aqueuses ce qui permet le stockage de produit de lavage pour une période relativement longue dans un réservoir de la machine elle-même, de sorte que sa distribution peut devenir automatique, la recharge du réservoir étant effectuée pour plusieurs lavages consécutifs.

L'avantage de l'invention décrite ici réside essentiellement dans le fait de produire un agent oxydant dans la mchine à laver pour l'introduire séparément à l'instant et à la concentration désirée. Seule la dose requise est produite à chaque lavage évitant de ce fait tout problème de conservation. La dose produite peut être adaptée de cas en cas au type de lavage et à l'effet recherché. La cellule électrochimique associée à la machine à laver peut conférer à celle-ci une larger autonomie, de sortie que le seul travail demandé à l'utilisateur est le remplissage périodique du distributeur de saumure. De plus tous les lave-vaisselles modernes, au moins en Europe, sont déjà munis d'un réservoir de saumure pour régénérer les résines échangeuses d'ions des adoucisseurs d'eau, donc dans ce cas la production d'hypochlorite par la machine ne demandera pas d'attention particulière à l'utilisateur, le même réservoir de saumure servant alors à deux usages.

La machine à laver selon l'invention permet en outre de résoudre différents problèmes spécifiques aux machines à laver le linge. Le dosage précis de quantités d'hypochlorite très dilué permet d'envisager la désinfection du linge de couleur sans faire intervenir l'utilisateur directement, c'est à dire sans risque d'erreurs humaines, qui serait élevé dans le cas de machines susceptibles d'être mises entre toutes les mains.

## Revendications

1. Machine automatique à laver le linge ou la vaisselle comprenant une cellule électrochimique (4, 34) à deux électrodes pour la fabrication de NaOCl destiné à traiter les surfaces des articles placées dans une cuve de traitement et des moyens pour alimenter cette cellule en une solution aqueuse pour la production électrolytique de NaOCl, caractérisée par le fait que cette cellule (4, 34) comporte un bac (5) renfermant une cathode (6, 36) et une anode (7, 35) dans un compartiment commun de ce bac reliées aux pôles négatif respectivement positif d'une source de courant, des moyens (13, 14a, 45, 43a) permettant de transférer tout le contenu de la cellule dans la cuve de traitement et un réservoir de NaCl (9, 33) associé à un distributeur doseur (16, 17, 51 à 54, 57) du NaCl de ce réservoir, dont la sortie est reliée (41) audit bac de la cellule électrochimique (4, 34).

2. Machine selon la revendication 1, caractérisée par le fait que les électrodes (6, 36, 7, 35) de la cellule électrochimique (4, 34) sont connectées à ladite source de courant par l'intermédiaire d'un dispositif programmateur (8, 40) des cycles de lavage de la machine pour déterminer l'intensité et la durée du courant de cette source.

3. Machine selon la revendication 1, caractérisée par le fait que le distributeur doseur (16, 17, 51 à 54, 57) de NaCl est relié à un mécanisme d'actionnement (20, 21, 56, 58) connecté à un dispositif programmateur (8, 40) des cycles de lavage de la machine pour déterminer les doses de NaCl en fonction du cycle de lavage.

4. Machine selon la revendication 1, notamment machine à laver la vaisselle, caractérisée par le fait que ledit réservoir de NaCl (33) est commun à ladite cellule (34) et à un adoucisseur d'eau à résines échangeuses d'ions, la sortie (54) du distributeur doseur débouchant dans un conduit (41, 44) reliant la cellule (34) à une alimentation en eau (31).

5. Machine selon la revendication 1, caractérisée par le fait que ladite cellule (4, 34) comporte un circuit d'eau de refroidissement (15, 38) monté en dérivation sur un conduit d'alimentation d'eau de la machine (1, 31).

**Patentansprüche**

1. Automatische Waschmaschine für Wäsche oder Geschirr, die eine elektrochemische Zelle (4, 34) mit zwei Elektroden zur Herstellung von NaOCl für die Oberflächenbehandlung der in einem Behandlungsbehälter eingebrachten Artikel und Mittel zum Speisen dieser Zelle mit einer wässrigen Lösung zur elektrolytischen Erzeugung von NaOCl aufweist, dadurch gekennzeichnet, daß die Zelle (4, 34) ein Gefäß (5), das eine Kathode (6, 36) und eine Anode (7, 35) in einem gemeinsamen Abteil dieses Gefäßes umschließt, die mit dem negativen bzw. dem positiven Pol einer Stromquelle verbunden sind, Mittel (13, 14a, 45, 43a), die es ermöglichen, den gasamten Inhalt der Zelle in den Behandlungsbehälter zu verbringen, und einen NaCl-Speicher (9, 33) aufweist, der an einen Dosier-Verteiler (16, 17, 51 bis 54, 57) für das NaCl in diesem Speicher angeschlossen ist, dessen Ausgang (41) mit dem Gefäß der elektrochemischen Zelle (4, 34) verbunden ist.

2. Maschine nach Anspruch 1, dadurch gekennzeichnet, daß die Elektroden (6, 36, 7, 35) der elektrochemischen Zelle (4, 34) mit der Stromquelle über eine Programmiereinrichtung (8, 40) für die Waschzyklen der Maschine verbunden sind, um die Stärke und Dauer des Stroms aus dieser Quelle zu bestimmen.

3. Maschine nach Anspruch 1, dadurch gekennzeichnet, daß der Dosier-Verteiler (16, 17, 51 bis 54, 57) für das NaCl mit einem Antriebsmechanismus (20, 21, 56, 58) verbunden ist, der an eine Programmiereinrichtung (8, 40) für die Waschzyklen der Maschine angeschlossen ist, um die NaCl-Mengen in Abhängigkeit von dem Waschzyklus zu bestimmen.

4. Maschine nach Anspruch 1, insbesondere Geschirrspüler, dadurch gekennzeichnet, daß der NaCl-Speicher (33) für die Zelle (34) und für eine Wasserenthärtungsanlage mit Ionenaustauschharzen gemeinsam ist, wobei der Ausgang (54) des Dosier-Verteilers in eine Leitung (41, 44) einmündet, die zie Zelle (34) mit einer Wasserversorgung (31) verbindet.

5. Maschine nach Anspruch 1, dadurch gekennzeichnet, daß die Zelle (4, 34) einen Wasserkühlkreis (15, 38) aufweist, der einer Wasserzuleitung der Maschine (1, 31) parallelgeschaltet ist.

**Claims**

1. Automatic machine for washing clothes or dishes comprising an electrochemical cell (4, 34) with two electrodes for the manufacture of NaOCl meant to be used for treating the surface of articles placed in a treatment vessel and means for supplying this cell with an aqueous solution for the electrolytic production of NaOCl, characterized by the fact that this cell (4, 34) comports a vat (5) containing a cathode (6, 36) and an anode (7, 35) in a common compartment of this vat, these being connected to the negative and positive terminals of a current supply, respectively, means (13, 14a, 45, 43a) enabling to transfer the whole content of the cell into the treatment vessel, and a tank of NaCl (9, 33) associated with a measuring dispenser (16, 17, 51 to 54, 57) of the NaCl of this tank the output of which (41) is connected to said vat of the electrochemical cell (4, 34).

2. Machine according to claim 1, characterized by the fact that the electrodes (6, 36, 7, 35) of the electrochemical cell (4, 34) are connected to said current supply by means of a programming device (8, 40) of the washing cycles of the machine for determining the intensity and the duration of the current from this supply.

3. Machine according to claim 1, characterized by the fact that the measuring dispenser (16, 17, 51 to 54, 57) of NaCl is connected to a working mechanism (20, 21, 56, 58) linked to a programming device (8, 40) of the washing cycles of the machine for determining the doses of NaCl as a function of the washing cycle.

4. Machine according to claim 1, namely dishwasher, characterized by the fact that said NaCl tank (33) is common to said cell (34) and to an ion exchange resin water softener, the outlet (54) of the measuring dispenser opening in a duct (41, 44) connecting the cell (34) to a water supply (31).

5. Machine according to claim 1, characterized by the fact that said cell (4, 34) comports a water cooling circuit (15, 38) installed in branching fashion on a conduit for supplying water to the machine (1, 31).

**FIG. 1**

FIG. 2